Europäisches Patentamt

European Patent Office

Office européen des brevets

(11) Veröffentlichungsnummer : **0 589 911 B1**

(12) # EUROPÄISCHE PATENTSCHRIFT

(45) Veröffentlichungstag der Patentschrift :
**16.08.95 Patentblatt 95/33**

(51) Int. Cl.$^6$ : **H02M 3/337**

(21) Anmeldenummer : **92910455.2**

(22) Anmeldetag : **23.05.92**

(86) Internationale Anmeldenummer :
**PCT/DE92/00416**

(87) Internationale Veröffentlichungsnummer :
**WO 92/22955 23.12.92 Gazette 92/32**

(54) SCHALTREGLER.

(30) Priorität : **19.06.91 DE 4120147**
**17.07.91 DE 4123634**

(43) Veröffentlichungstag der Anmeldung :
**06.04.94 Patentblatt 94/14**

(45) Bekanntmachung des Hinweises auf die
Patenterteilung :
**16.08.95 Patentblatt 95/33**

(84) Benannte Vertragsstaaten :
**BE DE FR GB IT NL**

(56) Entgegenhaltungen :
**EP-A- 0 077 958**
**EP-A- 0 355 333**

(56) Entgegenhaltungen :
**DE-A- 2 501 527**
**DE-A- 2 941 009**
**DE-A- 3 812 861**
**FR-A- 1 509 519**
**US-A- 4 980 813**

(73) Patentinhaber : **ANT Nachrichtentechnik**
**GmbH**
**Gerberstrasse 33**
**D-71522 Backnang (DE)**

(72) Erfinder : **OHMS, Franz**
**Reuteweg 14**
**D-7163 Oberrot (DE)**
Erfinder : **RUPPRICHT, Heike**
**Murrhardter Strasse 28**
**D-7150 Backnang (DE)**

## Beschreibung

Die Erfindung geht aus von einem Schaltregler gemäß dem Oberbegriff des Patentanspruchs 1. Ein solcher Schaltregler ist aus der DE 38 12 861 C2 bekannt.

Schaltregler bestehend aus einem Gegentaktwandler und einem Vorregler werden verwendet, wenn stark variierende Eingangsspannungen, wie beispielsweise bei Satelliten-Stromversorgungen, zu verarbeiten sind. Der Vorregler in Form eines Hochsetz- oder Tiefsetzstellers wird üblicherweise in Abhängigkeit der Schaltregler-Ausgangsspannung pulsbreitenmoduliert. Der nachgeschaltete Gegentaktwandler wird entweder mit Gegentaktimpulsen konstanter Dauer oder ebenfalls mit pulsbreitenmodulierten Impulsen betrieben.

Ein Schaltregler in Form eines Hochsetz- oder Tiefsetzstellers, welcher einen Sparübertrager aufweist, mit nachgeschaltetem Gegentaktwandler ist aus der GB-PS 1,172,501 bekannt.

Die DE 38 12 861 C2 zeigt einen als Resonanzwandler ausgebildeten Gegentaktwandler, dem ein getakteter Vorregler vorgeschaltet ist. Der Transformator des Gegentaktwandlers weist voneinander getrennte Gegentaktwicklungen auf, zu denen jeweils einer der Gegentaktschalter in Serie geschaltet ist. Ein Resonanzkondensator liegt parallel zu letzteren Serienschaltungen.

Aus der DE 29 41 009 C2 ist es bekannt einem herkömmlichen Gegentaktwandler einen Serien-Schaltregler in Form eines Hochsetz-/oder Tiefsetzstellers vorzuschalten, insbesondere für den Zweck, daß stark variierende Eingangsspannungen, wie beispielsweise bei Satelliten-Stromversorgungen, zu verarbeiten sind. Der Serien-Schaltregler wird auch dort in Abhängigkeit der Schaltregler-Ausgangsspannung pulsbreitenmoduliert.

Aufgabe der Erfindung ist es den Schaltregler eingangs genannter Art so auszubilden, daß ein hoher Wirkungsgrad erreichbar ist. Diese Aufgabe wird durch die Merkmale des Patentanspruchs 1 gelöst. Die Unteransprüche zeigen vorteilhafte Ausgestaltungen der Erfindung auf. Aus der US 4,959,765 oder aus der Siemens-Zeitschrift 48 (1974), Heft 11, Seiten 840 bis 846 ist es zwar bekannt, zur Verbesserung des Wirkungsgrades einen Gegentaktwandler durch Zuschalten eines Resonanzkondensators zu einem Resonanzwandler zu ergänzen, jedoch sind die dort aufgezeigten Resonanzwandler nicht ohne weiteres zum Betrieb mit einem vorgeschalteten Tiefsetzsteller/Hochsetzsteller geeignet. Bei dem aus der EP 77 958 B1 bekannten Gegentaktwandler werden zur Verringerung von Schaltverlusten die Gegentaktschalter mit einer Lückzeit betrieben, die so bemessen ist, daß in dieser Zeit der Gegentaktwandler als Resonanzgebilde mit der ihm eigenen Resonanzfrequenz von selbst umschwingen kann.

Der Schaltregler nach der Erfindung besitzt den Vorteil, daß die Kapazität des entsprechenden Resonanzkondensators größer gewählt werden kann als bei herkömmlichen Resonanz- oder Quasiresonanzwandlern. Für das Nachladen eines Resonanzkondensators steht ausreichend Zeit zur Verfügung, nämlich jeweils die Zeit während der der jeweilige Gegentaktschalter geöffnet ist und die Lückzeit. Aufgrund dieser Erkenntnis ist es überhaupt erst möglich den Resonanzwandler mit einem Hochsetz- oder Tiefsetzsteller als Vorregler sinnvoll zu betreiben. Der Transformator des Gegentaktwandlers wird besser ausgenutzt als bei vergleichbaren anderen Resonanzwandlern, d.h. bei gleicher Leistung kann das Bauvolumen reduziert werden. Dies ist insbesondere für Anwendungen in Satelliten von Vorteil. Die Regelung des Tiefsetzstellers oder Hochsetzstellers ist sehr zuverlässig, da das Regelkriterium aus getrennten Zweigen des Gegentaktwandlers gewonnen wird. Durch die Addition der Spannungen an den Resonanzkondensatoren für die Regelung des Tiefsetzstellers gemäß Anspruch 6 werden Störsignale (Ripple) stark unterdrückt.

Anhand der Zeichnungen wird ein Ausführungsbeispiel der Erfindung nun näher erläutert. Es zeigen

Figur 1 ein Prinzipschaltbild eines Schaltreglers nach der Erfindung,

Figur 2 zeitliche Verläufe ausgewählter Signale für den Schaltregler nach Figur 1,

Figur 3 ein Ersatzschaltbild des Gegentaktwandlers für einen der Gegentaktzweige,

Figur 4 den Umschwingstrom des Gegentaktwandlers für unterschiedliche Bauelemente-Dimensionierungen,

Figur 5 ein Prinzipschaltbild eines modifizierten Schaltreglers nach der Erfindung.

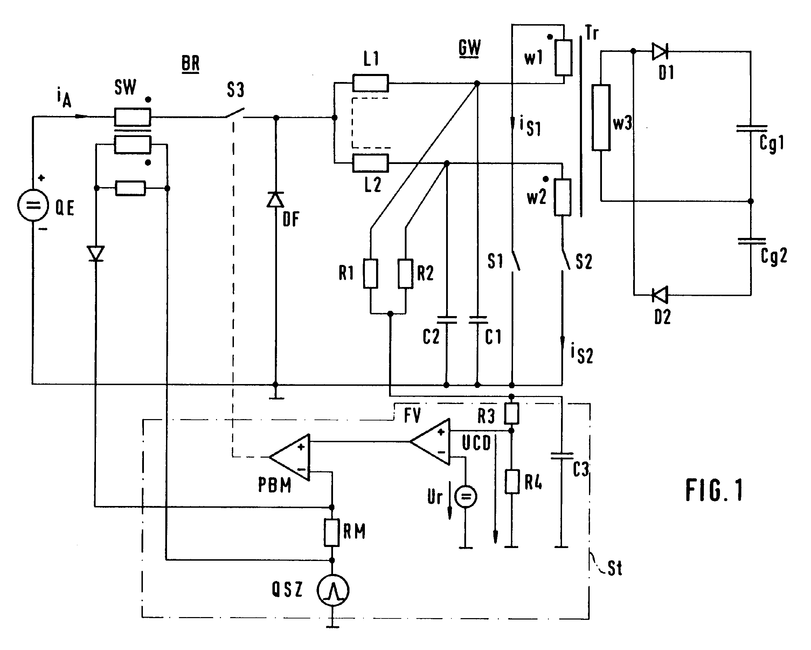

In Figur 1 ist ein von einer Eingangsgleichspannungsquelle QE gespeister Tiefsetzsteller - Buckregler - BR dargestellt, dem ein Parallel-Gegentaktgleichspannungswandler GW nachgeschaltet ist. Der Tiefsetzsteller BR umfaßt ein Stellglied im Längszweig, hier durch den Schalter S3 symbolisiert, und eine Freilaufdiode DF. Die Ausgangsinduktivität des Tiefsetzstellers im Längszweig ist erfindungsgemäß in zwei Einzelinduktivitäten L1 und L2 aufgeteilt, die magnetisch voneinander getrennt oder leicht gekoppelt sein können. Der Gegentaktwandler GW umfaßt einen Leistungstransformator Tr mit zwei voneinander galvanisch getrennten Primärwicklungen w1 und w2 und einer Sekundärwicklung w3. Die Einzelinduktivitäten L1 und L2 sind jeweils auf einen der Gegentaktzweige des Gegentaktwandlers geführt. Im Ausgangskreis des Gegentaktwandlers GW sind zwei Gleichrichterkreise mit Dioden D1, D2 und Glättungskondensatoren Cg1 und Cg2 dargestellt. Die beiden Gegentaktschalter S1 und S2 des Gegentaktwandlers sind jeweils in Serien zu einer der Primärwicklungen wl bzw. w2 angeordnet, welche wiederum in Serie zu jeweils einer der Einzelinduktivitäten L1, L2 angeordnet sind. Der Wicklungssinn der Primärwicklungen w1 und w2 ist ein Figur 1 durch Punkte markiert. Zur Ausbildung des Gegentaktwandlers als Resonanzwandler sind im Gegensatz zu üblichen Lösungen zwei Resonanzkondensatoren C1 und C2 vorgesehen. Diese Resonanzkondensatoren C1, C2 sind an die Verbindungsleitung zwischen einer Einzelinduktivität L1; L2 und einer Primärwicklung w1; w2 einerseits und an den primärwicklungsfernen Zusammenschaltpunkt der beiden Gegentaktschalter S1 und S2 angeschlossen. Somit liegen die Resonanzkondensatoren C1 und C2 jeweils parallel zu Serienschaltung eines Gegentaktschalters und einer Primärwicklung. Die Resonanzkondensatoren können auch an anderer Stelle in den Gegentaktzweigen angeordnet werden, beispielsweise in Serie zu den Primärwicklungen und/oder in mindestens einem der Ausgangskreise. Die Einzelinduktivitäten L1 und L2 bestimmen nicht die Resonanzfrequenz des als Resonanzwandler ausgebildeten Gegentaktwandlers GW. Die Resonanzkondensatoren C1 und C2 sind gegeneinander durch die Induktivitäten L1 und L2 entkoppelt, so daß sich keine Verstimmung der Resonanzfrequenz ergeben kann.

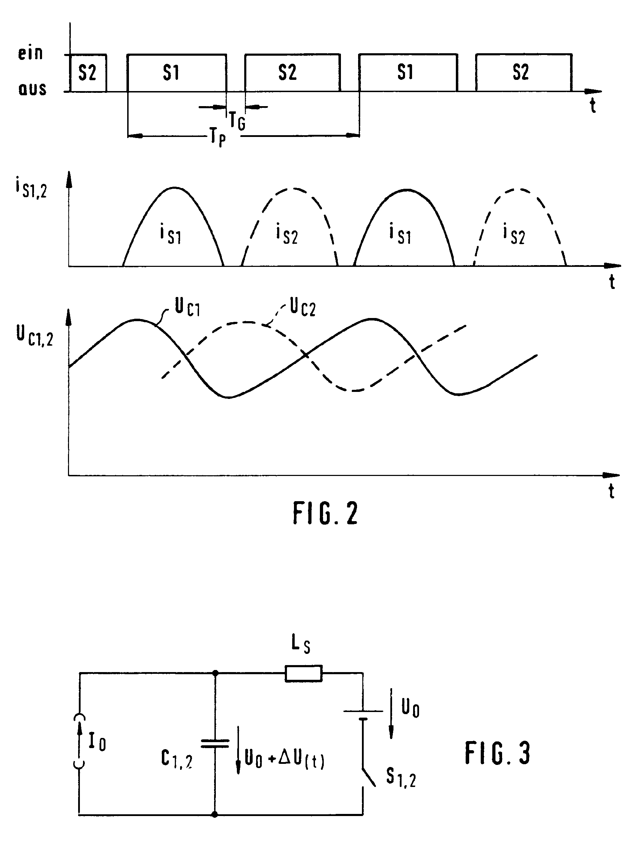

Das Schaltspiel der Gegentaktschalter S1 und S2 zeigt Figur 2 erste Zeile. Während einer Periodendauer Tp werden die Schalter S1 und S2 abwechselnd eingeschaltet. Während einer Lückzeit $T_G$ sind beide Schalter stromlos. Diese Lückzeit $T_G$ wird vorzugsweise so gewählt, daß in dieser Zeit das Resonanzgebilde in Form des Gegentaktwandlers gegebenenfalls unter Einbeziehung von parasitären Wicklungskapazitäten oder Gleichrichterkapazitäten umschwingen kann. Zur Aufbereitung der Steuersignale für die Schalter S1 und S2 unter Berücksichtigung der Lückzeit $T_G$ kann eine Steuereinrichtung gemäß der EP 77 958 B1 verwendet werden. Die Ströme $i_{s1}$ und $i_{s2}$ in den primärseitigen Gegentaktzweigen sind in Figur 2, Zeile 2 dargestellt ($i_{s2}$ gestrichelt). Figur 2, Zeile 3 zeigt die Spannungen $U_{c1}$ bzw. $U_{c2}$ an den Resonanzkondensatoren C1, C2. Das Ersatzschaltbild für einen Gegentaktzweig zeigt Figur 3. Der Eingangsstrom $I_o$ des Gegentaktwandlers ist durch eine Stromquelle dargestellt. Der Transformator Tr ist durch seine Streuinduktivität $L_s$ repräsentiert. Die Spannung $U_o$ stellt die vom Sekundärkreis aus transformierte Ausgangsspannung dar. Am Resonanzkondensator C1, bzw. C2 liegt dann die Spannung $U_o + \Delta U_{(t)}$. Für den Strom $i_{L(t)}$ im Resonanzkreis gilt folgende Beziehung:

$$i_{L(t)} = I_o (1 - \cos\omega t) + \frac{\Delta U}{\sqrt{L_s/C1,2}} \sin \omega t$$

mit

$$\omega \approx \frac{1}{\sqrt{L_s \cdot C1,2}} \cdot$$

Mit

$$\Delta U = \frac{I_o}{2\,C1,2} (T_P/2 * T_G)$$

gilt:

$$i_{L(t)} = I_o \left[ 1 - \cos\omega t + \left(\frac{T_p}{4} + \frac{T_G}{2}\right) \frac{1}{\sqrt{L_s \cdot C1,2}} \sin \omega t \right].$$

Für verschiedene Werte von

$$Z = \frac{\Delta U}{\sqrt{L_s/C1,2}}$$

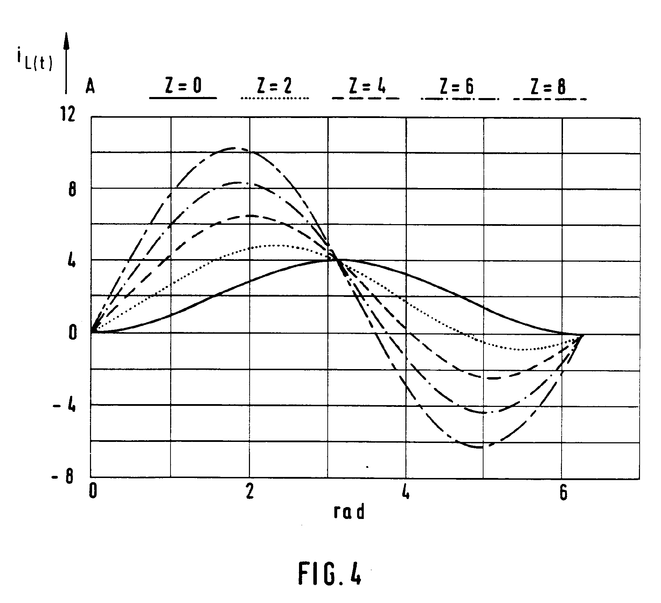

ist in Figur 4 der Umschwingstrom $i_{L(t)}$ dargestellt. Je höher der Wert Z gewählt wird, umso höher ist die Resonanzüberhöhung. Es ist vorteilhaft den Wert Z möglichst groß zu wählen, um einen steilen Nulldurchgang des Stromes zu erhalten und um so ein sicheres Schalten zu erreichen.

Zur Erzeugung des Regelsignals für den Tiefsetzsteller BR ist eine Steuerschaltung St vorgesehen, die einen Pulsbreitenmodulator PBM enthält. Als Steuerkriterien für den Pulsbreitenmodulator PBM werden die Spannungen an den Resonanzkondensatoren C1 und C2 herangezogen sowie der Energieaufnahmestrom $i_A$ des Tiefsetzstellers BR. Der Energieaufnahmestrom $i_A$ wird über den Stromwandler SW erfaßt, gleichgerichtet und einem Widerstand RM zugeführt, der in Serien zu einer Sägezahnspannungsquelle QSZ an den invertierenden Eingang des als Komparator ausgebildeten Pulsbreitenmodulators PBM angeschlossen ist. Der nichtinvertierende Eingang des Pulsbreitenmodulators PBM ist mit dem Ausgang eines Fehlersignalverstärkers FV verbunden, welcher das andere Schaltkriterim - hier die Spannungen an den Resonanzkondensatoren C1, C2

3

- mit einer Referenzspannung Ur vergleicht. Die Funktionsweise dieser Steuerschaltung St kann der US 5,001,413 entnommen werden. Die Länge des Steuerpulses für das Schaltregler-Stellglied S3 ist demnach von der Höhe des Energieaufnahmestroms $i_A$ und der Höhe des Fehlersignals am Ausgang des Fehlersignalverstärkers FV abhängig. Zur Gewinnung des resonanzkondensatorabhängigen Steuerkriteriums ist ein Summiernetzwerk bestehend aus den Widerständen R1, R2, R3, R4, C3 vorgesehen, mittels dessen eine Spannung UCD gewonnen wird, die proportional zur Summe der addierten Spannungen an den Resonanzkondensatoren C1 und C2 ist. Der Kondensator C3 parallel zum Spannungsteiler R3, R4 dient zur Integration der addierten Spannungen.

Anstelle eines Tiefsetzstellers kann dem Gegentaktwandler bei Bedarf auch ein Hochsetzsteller vorgeschaltet werden. Die Schaltzeiten sowie die Schaltungsausführung sind dann entsprechend der bekannten Eigenschaften eines Hochsetzstellers zu ändern. Falls ein einzusetzender Hochsetzsteller nicht sowieso schon eine ausgangsseitige Induktivität. besitzt, muß er gegebenenfalls so geändert werden, daß er ausgangsseitig eine Induktivität aufweist, die dann wie zuvor geschildert aufgeteilt werden kann.

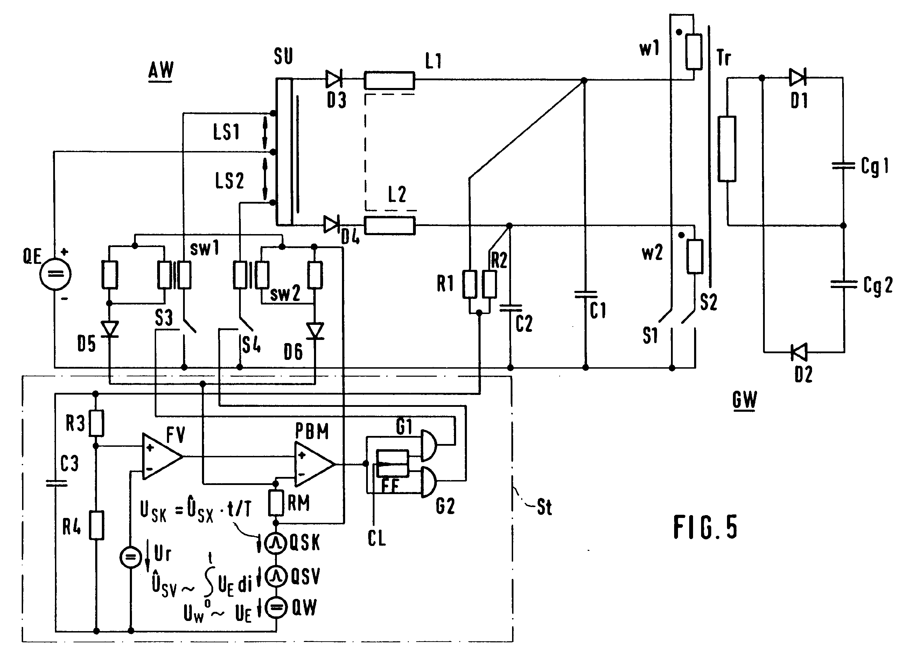

Besonders günstig ist es einen Hochsetzsteller zu verwenden wie er in Figur 5 dargestellt ist. Der Hochsetzsteller AW besteht aus einem Sparübertrager SU, zwei Stellgliedern, hier durch die Schalter S3 und S4 dargestellt, Gleichrichtern D3, D4 sowie den Induktivitäten L1 und L2. Im dargestellten Ausführungsbeispiel ist der Wicklungsmittelpunkt des Sparübertragers SU mit dem Pluspol der Eingangsgleichspannungsquelle QE verbunden. Zwischen symmetrisch zum Wicklungsmittelpunkt gelegenen Anzapfungen des Sparübertragers SU und dem Minuspol ist jeweils einer der Schalter S3 bzw. S4 angeordnet. Somit sind die Schalter S3 und S4 jeweils über eine Teilinduktivität LS1 bzw. LS2 des Sparübertragers SU mit der Eingangsgleichspannungsquelle verbunden. Den Sekundärkreis des Hochsetzstellers bilden die Gleichrichter D3 und D4, die jeweils gleichsinnig gepolt an die Wicklungsenden des Sparübertragers SU angeschlossen sind. Im Gegensatz zu bisherigen Hochsetzstellern (vgl. GB-PS 1,172,501 oder US-PS 5,001,413) ist die Ausgangsinduktivität des Hochsetzstellers erfindungsgemäß in die beiden Einzelinduktivitäten L1 und L2 aufgeteilt, die den Gleichrichtern D3 und D4 jeweils in Serie geschaltet sind. Diese Einzelinduktivitäten L1 und L2 können wie beim Ausführungsbeispiel nach Figur 1 magnetisch voneinander getrennt oder leicht gekoppelt sein.

Der Gegentaktwandler GW ist wie in Figur 1 aufgebaut und umfaßt einen Leistungstransformator Tr mit zwei voneinander galvanisch getrennten Primärwicklungen w1 und w2 und einer Sekundärwicklung w3. Jeweils eine der Serienschaltungen bestehend aus Gleichrichter D3 und D4 und Einzelinduktivität L1 bzw. L2 ist mit einem Gegentaktzweig des Gegentaktwandlers GW verbunden und zwar dadurch, daß den Serienschaltungen D3 , L1 bzw. D4, L2 jeweils die Primärwicklung w1 bzw. w2 eines Gegentaktzweiges in Serie geschaltet ist. Die Resonanzkondensatoren C1, C2 des Gegentaktwandlers GW bilden zusammen gleichzeitig die Ausgangskapazitäten der Hochsetzstellerausgänge. Sie liegen bezüglich der Gegentaktzweige jeweils parallel zur Serienschaltung gebildet aus Primärwicklung w1 bzw. w2 und Gegentaktschaltern S1 bzw. S2. Die Resonanzkondensatoren können als Alternativausführung auch an anderer Stelle in den Gegentaktzweigen und/oder in mindestens einem der Ausgangskreise angeordnet werden. Zur Erzeugung des Regelsignals für den Hochsetzsteller ist eine gemeinsame Steuerschaltung St vorgesehen mittels derer die Stellglieder S3 und S4 abwechselnd einschaltbar sind. Die Steuerschaltung St enthält einen Pulsbreitenmodulator PBM. Als Steuerkriterien für den Pulsbreitenmodulator PBM werden die Spannungen an den Resonanzkondensatoren C1 und C2 herangezogen sowie der Energieaufnahmestrom $i_A$ des Schaltreglers, der zwischen der Eingangsgleichspannungsquelle und dem Mittelabgriff des Sparübertragers SU fließt. Alternativ hierzu können auch, wie in Figur 1 dargestellt, die jeweils über die Stellglieder S3 und S4 fließenden Ströme mittels je eines Stromwandlers SW1 und SW2 erfaßt und mittels der beiden Gleichrichter D5, D6 gleichgerichtet werden. Die Ausgänge der beiden Gleichrichter D5, D6 sind zusammengeschaltet und auf einen gemeinsamen Widerstand RM geführt, der an den invertierenden Eingang des als Komparator ausgebildeten Pulsbreitenmodulators PM angeschlossen ist. Die getrennte Erfassung der Ströme über die Stellglieder hat den Vorteil, daß Unsymmetrien in den Schaltzeiten der beiden Schalter S3 und S4 nicht zu Fehlern führen können. In Serie zum Widerstand RM liegen drei Signalquellen: eine Sägezahnspannungsquelle QSK, die ein sägezahnförmiges Signal $U_{SK}$ konstanter Maximalamplitude erzeugt, eine weitere Sägezahnspannungsquelle $Q_{SV}$, deren Maximalamplitude $U_{SV}$ proportional zur aufintegrierten Spannung UE der Eingangsgleichspannungsquelle QE gewählt ist und einer Gleichspannungsquelle QW, deren Spannung $U_W$ proportional zur Höhe der Eingangsgleichspannung UE gewählt ist. Der nichtinvertierende Eingang des Pulsbreitenmodulators PBM ist mit dem Ausgang eines Fehlersignalverstärkers FV verbunden, welcher das andere Schaltkriterim - hier die Spannungen an den Resonanzkondensatoren C1, C2 - mit einer Referenzspannung Ur vergleicht. Durch diese Beschaltung ist gewährleistet, daß der arithmetische Mittelwert des Ausgangsstromes des Hochsetzstellers konstant ist und ein stabiler Reglerbetrieb möglich ist. Einzelheiten über die Dimensionierung dieser Beschaltung sind der US 5,001,413 oder der DE 38 28 816 A1 (Fig. 2 nebst Beschreibung) zu entnehmen; ebenso die Funktionsweise der Steuerschaltung St. Die Länge des Steuerpulses für die Schaltregler-Stellglieder S3 und S4 ist demnach von der Höhe des Energieaufnahmestromes $i_A$ bzw. der Ströme über die einzelnen Stellglieder S3, S4 und der Höhe des Fehlersignals am Ausgang des Fehlersignalverstärkers FV abhängig. Zur Gewinnung des resonanzkondensatorabhängigen Steuerkriteriums ist wie beim Ausführungsbeispiel gemäß Figur 1 ein Summiernetzwerk bestehend aus den Widerständen R1, R2, R3, R4 vorgesehen, mittels dessen eine Spannung UCD gewonnen wird, die proportional zur Summe der addierten Spannungen an den Resonanzkondensatoren C1 und C2 ist. Der Kondensator C3 parallel zum Spannungsteiler R3, R4 dient zur Integration der addierten Spannungen.

Zur Gewinnung der Gegentaktimpulse für die Schalter S3 und S4 kann eine gebräuchliche Impulsteilerstufe am Ausgang des Pulsbreitenmodulators PBM benutzt werden, die beispielsweise wie in der US 5,001,413 aus zwei AND-Gattern G1 und G2 sowie aus einem Gegentakt-Flip-Flop FF aufgebaut ist.

Bisher wurde immer ein Hochsetzsteller (Boost) mit Sparübertrager als Vorschaltstufe zum Gegentaktwandler behandelt. Durch Änderung der Anzapfpunkte für die Verbindungsleitungen zu den Schaltern S3 und S4, Verlegung der Anschlüsse der Gleichrichter D3 und D4 am Sparübertrager (Anzapfpunkte) und/oder Änderung der Ansteuersignale für die Schalter S3 und S4 kann auch ein Tiefsetzsteller (Buck) als Vorschaltstufe für den Gegentaktwandler realisiert werden. Hinweise für solche Änderungen finden sich in der DE 29 41 009 C2 oder in der DE 36 28 138 A1.

## Patentansprüche

1. Schaltregler bestehend aus einem Gegentaktwandler (GW), welcher als Resonanzwandler ausgebildet ist, mit vorgeschaltetem Tiefsetz- oder Hochsetzsteller, wobei die Primärwicklungen (w1, w2) des Gegentaktwandler-Transformators (Tr) galvanisch voneinander getrennt sind, dadurch gekennzeichnet, daß die Ausgangsinduktivität des Tiefsetz- oder Hochsetzsteller (BR) in zwei Einzelinduktivitäten (L1, L2) aufgeteilt ist, wobei diese Einzelinduktivitäten (L1, L2) jeweils zu einem der Gegentaktzweige des Gegentaktwandlers (GW) geführt sind, und daß jeder der Gegentaktzweige des Gegentaktwandlers mindestens einen Resonanzkondensator (C1; C2) aufweist, der jeweils an die Serienschaltung einer Einzelinduktivität (L1; L2) mit einer Primärwicklung des Gegentakt-Transformators (Tr) angeschlossen ist.

2. Schaltregler nach Anspruch 1, dadurch gekennzeichnet, daß die Einzelinduktivitäten (L1, L2) magnetisch schwach gekoppelt sind.

3. Schaltregler nach Anspruch 1 oder 2, dadurch gekennzeichnet, daß die Resonanzkondensatoren (C1, C2) der Gegentaktzweige an die Verbindungsleitung zwischen einer Einzelinduktivität (L1; L2) und einer Primärwicklung (11; w2) einerseits und an den primärwicklungsfernen Zusammenschaltpunkt der beiden Gegentaktschalter (S1, S2) andererseits angeschlossen sind.

4. Schaltregler nach einem der Ansprüche 1 bis 3, dadurch gekennzeichnet, daß der Steuerschaltung (St) für den Tiefsetzsteller/Hochsetzsteller (BR) als Steuerkriterium mindestens eine der Spannungen an den Resonanzkondensatoren (C1, C2) zuführbar ist.

5. Schaltregler nach Anspruch 4, gekennzeichnet durch ein Summiernetzwerk (R1, R2, R3, R4, C3) für die beiden Spannungen an den Resonanzkondensatoren, welches gegebenenfalls unter Zwischenschaltung eines Fehlersignalverstärkers (FV) an einen Steuereingang des Pulsbreitenmodulators (PBM) für den Tiefsetzsteller (BR) angeschlossen ist.

6. Schaltregler nach Anspruch 5, dadurch gekennzeichnet, daß der Steuerschaltung (St) für den Tiefsetzsteller/Hochsetzsteller (BR) als weiteres Steuerkriterium der aufgenommene Strom ($i_A$) des Schaltreglers oder ein davon abgeleitetes Signal zuführbar ist, dem gegebenenfalls ein Sägezahnsignal überlagert ist.

7. Schaltregler nach einem der Ansprüche 1 bis 6, dadurch gekennzeichnet, daß die Gegentaktschalter (S1, S2) mit einer Lückzeit betreibbar sind, während der beide Schalter (S1, S2) gleichzeitig stromlos sind und daß diese Lückzeit ($T_G$) derart bemessen ist, daß einerseits der Gegentaktwandler (GW) als Resonanzgebilde sicher umschwingen kann und andererseits für das Nachladen des jeweiligen Resonanzkondensators (C1; C2) ausreichend Zeit zur Verfügung steht.

8. Schaltregler nach einem der Ansprüche 1 bis 7, dadurch gekennzeichnet, daß der Hochsetz-/oder Tiefsetzsteller (AW) aus einem Sparübertrager (SU) und primärseitigen Schaltern (S3, S4), die jeweils über eine Teilinduktivität (LS1, LS2) des Sparübertragers (SU) mit einer Eingangsgleichspannungsquelle (QE) verbunden sind, besteht, sowie aus sekundärseitigen Gleichrichtern (D1, D2) und einer Ausgangsinduktivität, die in die beiden Einzelinduktivitäten (L1, L2) aufgeteilt ist.

9. Schaltregler nach Anspruch 5 und 8, dadurch gekennzeichnet, daß der Steuerschaltung (St) für den Hochsetz-/oder Tiefsetzsteller (AW) als weiteres Steuerkriterium jeweils die über die primärseitigen Schalter (S3, S4) fließenden Ströme oder ein davon abgeleitetes Signal zuführbar ist, dem gegebenenfalls ein Sägezahnsignal überlagert ist.

10. Schaltregler nach Anspruch 8 und 9, dadurch gekennzeichnet, daß dem Pulsbreitenmodulator (PBM) einerseits das von der Summenspannung an den Resonanzkondensatoren (C1, C2) abgeleitete Signal und andererseits ein Referenzsignal zugeleitet wird, das sich aus einem Signal proportional zum aufgenommenen Strom ($i_A$), einem sägezahnförmigen Signal ($U_{SK}$) konstanter Maximalamplitude und mindestens einem weiteren Signal ($U_{SV}$, $U_w$) zusammensetzt, dessen Amplitude von der Höhe der Eingangsspannung (UE) des Schaltreglers abhängig ist.

11. Schaltregler nach Anspruch 10, dadurch gekennzeichnet, daß das weitere Signal ein sägezahnförmiges Signal ($U_{SV}$) ist, dessen Maximalamplitude proportional zur aufintegrierten Eingangsspannung (UE) ist.

12. Schaltregler nach einem der Ansprüche 8 bis 11, dadurch gekennzeichnet, daß die Gegentaktschalter (S1, S2) mit einer Lückzeit betreibbar sind, während der beide Schalter (S1, S2) gleichzeitig stromlos sind und daß diese Lückzeit ($T_G$) derart bemessen ist, daß einerseits der Gegentaktwandler (GW) als Resonanzgebilde sicher umschwingen kann und andererseits für das Nachladen des jeweiligen Resonanzkondensators (C1; C2) ausreichend Zeit zur Verfügung steht.

## Claims

1. A switching regulator, consisting of a push-pull converter (GW), which is embodied as a resonance converter, with a buck or boost regulator connected upstream, wherein the primary windings (w1, w2) of the push-pull converter transformer (Tr) are galvanically separated from each other, characterized in that the output inductance of the buck or boost regulator (BR) is divided into two individual inductances (L1, L2), wherein these individual inductances (L1, L2) are respectively supplied to one of the push-pull branches of the push-pull converter (GW), and that each one of the push-pull branches of the push-pull convetrer has at least one resonance capacitor (C1, C2), which is respectively connected with the series circuit of an individual inductance L1, L2) with a primary winding of the push-pull transformer (Tr).

2. A switching regulator in accordance with claim 1, characterized in that the individual inductances (L1, L2) are magnetically weakly coupled.

3. A switching regulator in accordance with claim 1 or 2, characterized in that the resonance capacitors (C1, C2) of the push-pull branches are connected to the connecting line between an individual inductance (L1; L2) and a primary winding (w1; w2) on the one side, and to the connecting point remote from the primary winding of the two push-pull switches (S1, S2).

4. A switching regulator in accordance with one of claims 1 to 3, characterized in that at least one of the voltages at the resonance capacitors (C1, C2) can be supplied as control criteria to the control circuit (St) for the buck/boost generator (BR).

5. A switching regulator in accordance with claim 4, characterized by a summator net (R1, R2, R3, R4, C3) for the two voltages at the resonance capacitors which is connected, if required with the interposition of an error signal amplifier (FV), to a control input of the pulse width modulator (PBM) for the buck generator (BR).

6. A switching regulator in accordance with claim 5, characterized in that the absorbed current ($i_A$) of the switching regulator or a signal derived therefrom, on which a sawtooth signal has been superimposed if required, can be supplied as further control criteria to the control circuit (St) for the buck/boost regulator (BR).

7. A switching regulator in accordance with one of claims 1 to 6, characterized in that the push-pull switches (S1, S2) can be operated with a blackout time during which both switches (S1, S2) are currentless at the same time, and that this blackout time ($T_G$) is of such a duration that, on the one hand, the push-pull converter (GW) as a resonance structure can assuredly reverse and, on the other hand, there is sufficient time available for recharging the respective resonance capacitor (C1; C2).

8. A switching regulator in accordance with one of claims 1 to 7, characterized in that the boost/or buck generator (AW) consists of an auto-transformer (SU) and switches (S3, S4) on the primary side, which are respectively connected with an input dc-voltage source (QE) via respectively one partial inductance (LS1, LS2) of the auto-transformer (SU), and of rectifiers (D1, D2) on the secondary side and an output inductance which is divided into the two individual inductances (L1, L2).

9. A switching regulator in accordance with claims 5 and 8, characterized in that the currents respectively flowing across the switches (S3, S4) on the primary side or a signal derived therefrom, on which a sawtooth signal is superimposed, if required, can be provided as further control criteria to the control circuit (St) for the boost/or buck regulator (AW).

10. A switching regulator in accordance with claims 8 and 9, characterized in that the signal derived from the added voltage at the resonance capacitors (C1, C2) is supplied to the pulse width modulator (PBM) on the one side and a reference signal on the other side, which is composed of a signal proportional to the absorbed current ($i_A$), a sawtooth-shaped signal ($U_{SK}$) of a constant maximum amplitude and at least one further signal ($U_{SV}$, $U_w$), the amplitude of which depends on the strength of the input voltage (UE) of the switching generator.

11. A switching regulator in accordance with claim 10, characterized in that the further signal is a sawtooth-shaped signal ($U_{SV}$), the maximum amplitude of which is proportional to the integrated input voltage (UE).

12. A switching regulator in accordance with one of claims 8 to 11, characterized in that the push-pull switches (S1, S2) can be operated with a blackout time during which both switches (S1, S2) are currentless at the same time and that this blackout time ($T_G$) is of such a duration that, on the one hand, the push-pull converter (GW) as a resonance structure can assuredly reverse and, on the other hand, there is sufficient time available for recharging the respective resonance capacitor (C1; C2).

## Revendications

1. Régulateur à découpage comprenant un convertisseur en push-pull (GW) réalisé comme un convertisseur à résonance et précédé d'un abaisseur de tension (organe dévolteur) ou d'un élévateur de tension (organe survolteur), dans lequel les enroulements primaires (w1, w2) du transformateur (Tr) du convertisseur en push-pull sont séparés galvaniquement l'un de l'autre, caractérisé en ce que l'inductance de sortie de l'abaisseur de tension ou de l'élévateur de tension (BR) est partagée en deux inductances élémentaires (L1, L2) menant chacune à l'une des branches push-pull du convertisseur (GW), et que chacune des branches push-pull de ce convertisseur comporte au moins un condensateur à résonance (C1; C2) raccordé au montage en série d'une inductance élémentaire (L1; L2) et d'un enroulement primaire du transformateur (Tr).

2. Régulateur à découpage selon la revendication 1, caractérisé en ce que les inductances élémentaires (L1, L2) sont magnétiquement couplées faiblement entre elles.

3. Régulateur à découpage selon la revendication 1 ou 2, caractérisé en ce que les condensateurs à résonance (C1, C2) des branches push-pull sont reliés d'un côté à la ligne reliant une inductance élémentaire (L1; L2) à un enroulement primaire (W1; W2) et de l'autre côté au point de connexion, éloigné des enroulements primaires, des deux interrupteurs push-pull (S1, S2).

4. Régulateur à découpage selon une des revendications 1 à 3, caractérisé en ce que l'une au moins des tensions apparaissant aux bornes des condensateurs à résonance (C1, C2) est applicable en tant que critère de commande au circuit de commande (St) pour l'abaisseur/élévateur de tension (BR).

5. Régulateur à découpage selon la revendication 4, caractérisé par un réseau de sommation (R1, R2, R3, R4, C3) pour les deux tensions apparaissant aux bornes des condensateurs à résonance, réseau qui est raccordé, éventuellement avec interposition d'un amplificateur de signaux d'erreur (FV), à une entrée de commande du modulateur d'impulsions en durée (PBM) pour l'abaisseur de tension (BR).

6. Régulateur à découpage selon la revendication 5, caractérisé en ce que le courant ($i_A$) absorbé par le régulateur à découpage, ou un signal dérivé de ce courant, auquel est éventuellement superposé un signal en dents de scie, est applicable comme critère de commande supplémentaire à l'abaisseur/élévateur de tension (BR).

7. Régulateur à découpage selon une des revendications 1 à 6, caractérisé en ce que les interrupteurs push-pull (S1, S2) sont manoeuvrables avec utilisation d'un temps d'interruption au cours duquel les deux interrupteurs (S1, S2) sont coupés simultanément, et que ce temps d'interruption ($T_G$) est choisi pour que, d'une part, le convertisseur en push-pull (GW), en tant que dispositif à résonance, puisse passer avec certitude à l'autre état et que, d'autre part, il y ait suffisamment de temps disponible pour recharger le condensateur à résonance (C1; C2) concerné.

8. Régulateur à découpage selon une des revendications 1 à 7, caractérisé en ce que l'élévateur ou l'abaisseur de tension (AW) est composé d'un autotransformateur (SU) et d'interrupteurs (S3, S4) se trouvant du côté primaire et reliés chacun à travers une inductance partielle (LS1, LS2) de l'autotransformateur (SU) à une source de tension continue d'entrée (QE), ainsi que de redresseurs (D1, D2) prévus du côté secondaire et d'une inductance de sortie partagée pour former les deux inductances élémentaires (L1, L2).

9. Régulateur à découpage selon les revendications 5 et 8, caractérisé en ce que les courants traversant les interrupteurs (S3, S4) prévus du côté primaire, ou un signal dérivé de ces courants, auquel est superposé éventuellement un signal en dents de scie, est applicable en tant que critère de commande supplémentaire au circuit de commande (St) pour l'élévateur ou l'abaisseur de tension (AW).

10. Régulateur à découpage selon les revendications 8 et 9, caractérisé en ce que le modulateur d'impulsions en durée (PBM) reçoit d'une part le signal tiré de la tension cumulée apparaissant aux bornes des condensateurs à résonance (C1, C2) et, d'autre part, un signal de référence qui se compose d'un signal proportionnel au courant absorbé ($i_A$), d'un signal ($U_{SK}$) en forme de dents de scie et d'amplitude maximale constante et d'au moins un signal supplémentaire ($U_{SV}$, $U_w$) dont l'amplitude dépend de l'amplitude de la tension d'entrée (UE) du régulateur à découpage.

11. Régulateur à découpage selon la revendication 10, caractérisé en ce que le signal supplémentaire est un signal ($U_{SV}$) en forme de dents de scie dont l'amplitude maximale est proportionnelle à la tension d'entrée intégrée (UE).

12. Régulateur à découpage selon une des revendications 8 à 11, caractérisé en ce que les interrupteurs push-pull (S1, S2) sont manoeuvrables avec utilisation d'un temps d'interruption au cours duquel les deux interrupteurs (S1, S2) sont coupés simultanément, et que ce temps d'interruption ($T_G$) est choisi pour que, d'une part, le convertisseur en push-pull (GW), en tant que dispositif à résonance, puisse passer avec certitude à l'autre état et que, d'autre part, il y ait suffisamment de temps disponible pour recharger le condensateur à résonance (C1; C2) concerné.

FIG. 1

FIG. 2

FIG. 3

FIG. 4

FIG.5

EP 0 589 911 B1